# EUROPEAN PATENT SPECIFICATION

(11) **EP 2 518 275 B1**
(45) Date of publication and mention of the grant of the patent: **18.09.2019**
(21) Application number: 12166078.1
(22) Date of filing: 27.04.2012
(51) Int. Cl.: F01D 17/02, F01D 21/14, G01N 27/12

(54) **MOISTURE MONITORING SYSTEM FOR GAS TURBINE ENGINES**
FEUCHTIGKEITSÜBERWACHUNGSSYSTEM FÜR GASTURBINENMOTOREN
SYSTÈME DE SURVEILLANCE D'HUMIDITÉ POUR MOTEURS À TURBINE À GAZ

(30) Priority: 28.04.2011 US 201113097012
(43) Date of publication of application: 31.10.2012
(73) Proprietor: United Technologies Corporation, Farmington, CT 06032 (US)
(72) Inventor: Raji, Edris, Tolland, CT Connecticut 06084 (US); Hyland Jr., James F., Farmington, CT Connecticut 06032 (US)
(74) Representative: Dehns

(56) References cited:
- WO-A1-2008/107922
- US-A- 4 221 962
- US-A- 4 379 406
- US-B1- 6 313 646

## Description

### BACKGROUND

The present disclosure relates to gas turbine engines, and more particularly to a moisture monitoring system therefor.

Composite materials such as Ceramic and Organic Matrix Composites continue to become more prevalent in advanced aircraft gas turbine engines due to their relatively low weight and high strength. These materials, however, are moisture sensitive which may affect flight operations.

WO 2008/107922 A1 discloses a moisture monitoring system for a gas turbine engine in accordance with the pre-characterizing part of claim 1.

US 4221962 A and US 6313646 B1 disclose methods of monitoring moisture absorption in a laminated composite structure.

### SUMMARY

According to a first aspect, there is provided a moisture monitoring system for a gas turbine engine comprising: a composite material structure; a sensor system operable to sense a moisture level in said composite material structure; and a control in communication with said sensor system to determine moisture data from the moisture level, characterised in that said moisture data includes a G limit.

According to a second aspect, there is provided a method of adjusting flight operations comprising: determining a moisture level within a composite material structure of a gas turbine engine; characterised by communicating moisture data related to the moisture level to an aircrew, and by communicating a G limit as the moisture data.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a general perspective view an exemplary gas turbine engine embodiment for use with the present disclosure;
Figure 2 is a block diagram of a moisture monitoring system;
Figure 3 is a schematic view of a sensor for the moisture monitoring system of an exemplary module used to implement an engine power anticipation algorithm; and
Figure 4 is a flowchart illustrating operation of the moisture monitoring system.

### DETAILED DESCRIPTION

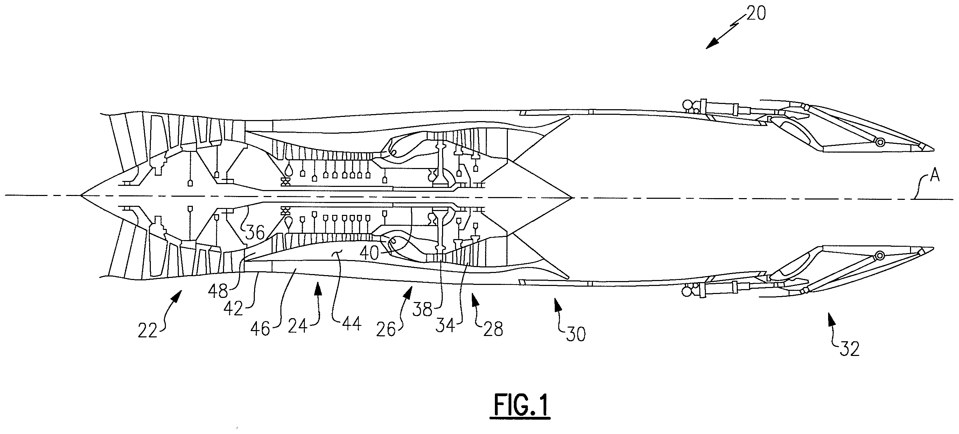

Figure 1 schematically illustrates a gas turbine engine 20. The gas turbine engine 20 is disclosed herein as a two-spool turbofan that generally incorporates a fan section 22, a compressor section 24, a combustor section 26, a turbine section 28, an augmenter section 30 and a nozzle section 32. The sections are defined along a central longitudinal engine axis A. Although depicted as an augmented low bypass gas turbine engine in the disclosed non-limiting embodiment, it should be understood that the concepts described herein are applicable to other gas turbine engines including geared architecture engines, direct drive turbofans, turboshaft engines and others.

The compressor section 24, the combustor section 26 and the turbine section 28 are generally referred to as the engine core. The fan section 22 and a low pressure turbine 34 of the turbine section 28 are coupled by a first shaft 36 to define a low spool. The compressor section 24 and a high pressure turbine 38 of the turbine section 28 are coupled by a second shaft 40 to define a high spool.

An outer engine case structure 42 and an inner engine structure 44 define a generally annular secondary flow path 46 around a core flow path 48 of the engine core. It should be understood that various structure within the engine may define the outer engine case structure 42 and the inner engine structure 44 which essentially define an exoskeleton to support the core engine therein.

Air which enters the fan section 22 is divided between a core flow through the core flow path 48 and a secondary flow through the secondary flow path 46. The core flow passes through the combustor section 26, the turbine section 28, then the augmentor section 30 where fuel may be selectively injected and burned to generate additional thrust through the nozzle section 32. The secondary flow may be utilized for a multiple of purposes to include, for example, cooling and pressurization. The secondary flow as defined herein is any flow different from the primary combustion gas exhaust core flow. The secondary flow passes through an annulus defined by the outer engine case structure 42 and the inner engine structure 44 then may be at least partially injected into the core flow adjacent the nozzle section 32.

The outer engine case structure 42 and the inner engine structure 44 as well as other engine structures are often manufactured of Ceramic Matrix Composite, Organic Matrix Composite materials and combinations thereof which are moisture sensitive. The Ceramic Matrix Composite and the Organic Matrix Composite materials will hereinafter be referred to herein as composite materials but it should be understood that any such moisture sensitive materials and structured are also contemplated.

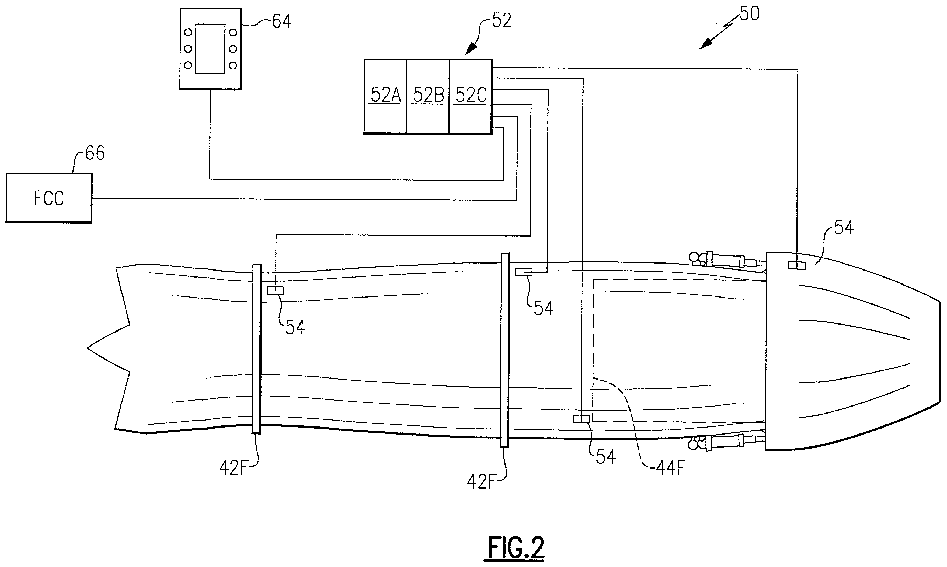

With reference to Figure 2, a moisture monitoring system 50 interfaces with the gas turbine engine 20 in real time to ensure that the moisture content of the composite material is at an acceptable dryness level and that the aircraft may become airborne and maneuver as soon as possibly for emergent situations. The moisture monitoring system 50 generally includes a control 52 and a sensor system 54 in communication with the control 52. The sensor system 54 senses a moisture level and the control 52 determines moisture data from the moisture level for communication to the aircrew.

The control 52 typically includes a processor 52A, a memory 52B, and an interface 52C. The processor 52A may be any type of microprocessor having desired performance characteristics. The memory 52B may include any type of computer readable medium which stores the data and control algorithms described herein. The interface 52C may include any system that facilitates communication with the sensor system 54 as well as other systems.

In one non-limiting embodiment, the control 52 may be a Full Authority Digital Electronic Control (FADEC), a portion of a flight control computer (FCC), a stand-alone control module or other controller. The sensor system 54 may include but not be limited to dielectric moisture meters.

The sensor system 54 may include a multiple of sensors strategically placed in the composite material structures throughout the engine 20. In one non-limiting embodiment, the sensor system 54 may be specifically located at a high stress location such as a flange 42F, 44F which typically provide an interface between engine case sections and are typically subject to significant bending moments. It should be understood that the sensor system 54 may include any number of sensors positioned at multiple locations.

In one disclosed non-limiting embodiment, the sensor system 54 is directly embedded within the composite material structures. Although the outer engine case structure 42 and the inner engine structure 44 are illustrated herein, it should be understood that any composite material structure will benefit herefrom.

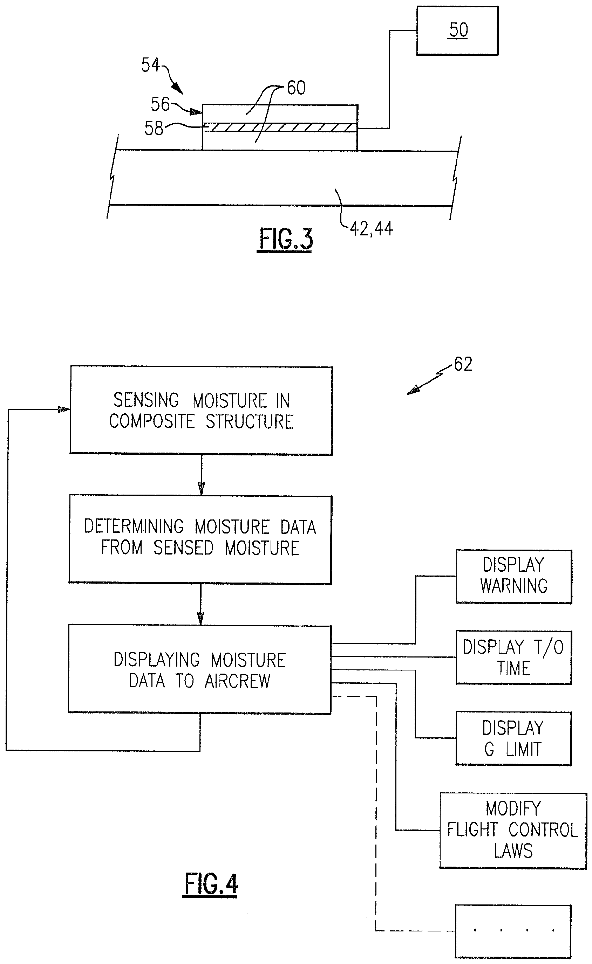

In another disclosed non-limiting embodiment, the sensor system 54 may include mountable sensors 56 each of which may include a dielectric moisture meter 58 imbedded or otherwise located in a composite material coupon 60 that is similar or identical in composition to the composite material structures to be monitored (Figure 3). The composite material coupon 60 may then be removably or otherwise mounted to the composite material structures at a desired location in a replaceable manner. That is, the mountable sensors 56 need not be imbedded directly into the composite material structures as discussed above but are separately mounted thereto.

The control 52 executes a moisture monitoring algorithm 62. The functions of the algorithm 62 are disclosed in terms of functional block diagrams in Figure 4, and it should be understood by those skilled in the art with the benefit of this disclosure that these functions may be enacted in either dedicated hardware circuitry or programmed software routines capable of execution in a microprocessor based electronics control embodiment. When implemented as programmed software routines, the functions of algorithm 62 may be tangibly embodied in memory 52B for execution by processor 52A.

The moisture monitoring system 50 communicates with the aircrew through a cockpit display 64 such as a multi-function display to provide moisture data to the aircrew in real time. The moisture data may be of various forms usable by the aircrew such as an a alert, a warning light, a condition status, or other symbology or control functionality which apprises the aircrew of the composite material structure moisture state.

In another non-limiting embodiment, the system 50 communicates a required idle time prior to takeoff. For example, a countdown time may be presented to the aircrew which counts down to a takeoff time or to a particular G limit capability. Since moisture data is determined essentially in real time, the system 50 readily accounts for any local weather anomalies for each individual vehicle.

The system 50 displays at least one flight limit, including a G limit, (and optionally displays a plurality of flight limits) which allows essentially immediate take off in emergent situations but alerts an aircrew to the G limit which may be exerted while the composite material dries. This permits an aircrew to initiate a mission under restricted G conditions until the composite material dries to full G capability. This is compared to current practices of awaiting a calculated predetermined idle time period on the ground to assure an acceptable moisture level but which may be longer than actually required because the calculate time is based on worst case conditions and is not real time or weather correlated. While the conventional method may be refined to account for average regional weather conditions and other factors, maximum efficiency is still not provided in real time which may make a critical time difference for military aircraft in emergent situations.

In another non-limiting embodiment, the system 50 communicates directly with a flight control computer 66 to limit the aircraft flight envelop through modification of flight control laws while the composite material is drying to assure the composite material structures are not inadvertently overstressed

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A moisture monitoring system (50) for a gas turbine engine (20) comprising:
a composite material structure (42,44);
a sensor system (54;56) operable to sense a moisture level in said composite material structure; and
a control (52) in communication with said sensor system (54;56) configured to determine moisture data from the moisture level,
**characterised in that** said moisture data includes a G limit that may be exerted while the composite material dries.

2. The system as recited in claim 1, wherein said sensor system (54;56) includes a dielectric moisture meter.

3. The system as recited in claim 1 or 2, wherein said sensor system (54) is embedded within said composite material structure (42,44).

4. The system as recited in claim 1 or 2, wherein said sensor system (56) is embedded within a composite material coupon (60), said composite material coupon (60) being mounted to said composite material structure (42,44).

5. The system as recited in claim 1, 2, 3 or 4, wherein said composite material structure is an outer engine case structure (42) of the gas turbine engine (20); preferably wherein said sensor system (54) is located adjacent a flange (42F) of said outer engine case structure (42).

6. The system as recited in claim 1, 2, 3 or 4, wherein said composite material structure is an inner engine structure (44).

7. The system as recited in any preceding claim, wherein said control (52) is a Full Authority Digital Electronic Control (FADEC).

8. The system as recited in any preceding claim comprising:
a cockpit display (64) in communication with said control (52), said cockpit display operable to display said moisture data.

9. The system as recited in any preceding claim, wherein said moisture data includes an idle time prior to takeoff; and/or wherein said moisture data includes a time; and/or wherein said moisture data includes a countdown time.

10. The system as recited in any preceding claim, further comprising a flight control computer (66) in communication with said control (52) to limit an aircraft flight envelope in response to said moisture level.

11. A method of adjusting flight operations comprising:
determining a moisture level within a composite material structure (42,44) of a gas turbine engine (20);
**characterised by** communicating moisture data related to the moisture level to an aircrew,
and by communicating a G limit that may be exerted while the composite material dries as the moisture data, and adjusting flight operations according to the communicated G limit.

12. The method as recited in claim 11, further comprising:
communicating an idle time as the moisture data.

13. The method as recited in claim 11 or 12, further comprising:
limiting an aircraft flight envelop in response to said moisture level.

## Patentansprüche

1. Feuchtigkeitsüberwachungssystem (50) für einen Gasturbinenmotor (20), Folgendes umfassend:
eine Verbundwerkstoffstruktur (42,44);
ein Sensorsystem (54;56), das zum Erfassen eines Feuchtigkeitsgrads in der Verbundwerkstoffstruktur betreibbar ist; und
eine Steuerung (52) in Verbindung mit dem Sensorsystem (54;56), die so konfiguriert ist, dass sie Feuchtigkeitsdaten aus dem Feuchtigkeitsgrad bestimmt,
**dadurch gekennzeichnet, dass** die Feuchtigkeitsdaten einen G-Grenzwert enthalten, der angewendet werden kann, während der Verbundwerkstoff trocknet.

2. System nach Anspruch 1, wobei das Sensorsystem (54;56) einen dielektrischen Feuchtigkeitsmesser beinhaltet.

3. System nach Anspruch 1 oder 2, wobei das Sensorsystem (54) in die Verbundwerkstoffstruktur (42,44) eingebettet ist.

4. System nach Anspruch 1 oder 2, wobei das Sensorsystem (56) in einem Verbundwerkstoff-Coupon (60) eingebettet ist, wobei der Verbundwerkstoff-Coupon (60) an der Verbundwerkstoffstruktur (42,44) angebracht ist.

5. System nach Anspruch 1, 2, 3 oder 4, wobei die Verbundwerkstoffstruktur eine äußere Motorgehäusestruktur (42) des Gasturbinenmotors (20) ist; vorzugsweise wobei das Sensorsystem (54) benachbart zu einem Flansch (42F) der äußeren Motorgehäusestruktur (42) angeordnet ist.

6. System nach Anspruch 1, 2, 3 oder 4, wobei die Verbundwerkstoffstruktur eine innere Motorstruktur (44) ist.

7. System nach einem der vorhergehenden Ansprüche, wobei die Steuerung (52) eine volldigitale Triebwerksregelung (Full Authority Digital Electronic Control - FADEC) ist.

8. System nach einem der vorhergehenden Ansprüche, Folgendes umfassend:
eine Cockpit-Anzeige (64) in Verbindung mit der Steuerung (52), wobei die Cockpit-Anzeige betreibbar ist, um die Feuchtigkeitsdaten anzuzeigen.

9. System nach einem der vorhergehenden Ansprüche, wobei die Feuchtigkeitsdaten eine Leerlaufzeit vor dem Abheben beinhalten; und/oder wobei die Feuchtigkeitsdaten eine Zeit beinhalten; und/oder wobei die Feuchtigkeitsdaten eine Countdown-Zeit beinhalten.

10. System nach einem der vorhergehenden Ansprüche, ferner einen Flugsteuerungsrechner (66) umfassend, der mit der Steuerung (52) in Verbindung steht, um einen Flugzeug-Flugbereich als Reaktion auf den Feuchtigkeitsgrad zu begrenzen.

11. Verfahren zum Anpassen des Flugbetriebs, Folgendes umfassend:
Bestimmen eines Feuchtigkeitsgrads innerhalb einer Verbundwerkstoffstruktur (42,44) eines Gasturbinenmotors (20); **gekennzeichnet durch** Übermitteln von Feuchtigkeitsdaten, die sich auf den Feuchtigkeitsgrad beziehen, an eine Flugzeugbesatzung,
und durch Übermitteln eines G-Grenzwerts, der, während der Verbundwerkstoff trocknet, als Feuchtigkeitsdaten angewendet werden kann, und Anpassen des Flugbetriebs gemäß dem übermittelten G-Grenzwert.

12. Verfahren nach Anspruch 11, ferner Folgendes umfassend:
Übermitteln einer Leerlaufzeit als die Feuchtigkeitsdaten.

13. Verfahren nach Anspruch 11 oder 12, ferner Folgendes umfassend:
Begrenzen eines Flugzeug-Flugbereichs als Reaktion auf den Feuchtigkeitsgrad.

## Revendications

1. Système de surveillance d'humidité (50) pour un moteur à turbine à gaz (20) comprenant :
une structure de matériau composite (42, 44) ;
un système de capteur (54 ; 56) servant à détecter un niveau d'humidité dans ladite structure de matériau composite ; et une commande (52) en communication avec ledit système de capteur (54 ; 56) configurée pour déterminer des données d'humidité à partir du niveau d'humidité,
**caractérisé en ce que** lesdites données d'humidité incluent une limite G qui peuvent être exercée pendant que le matériau composite sèche.

2. Système selon la revendication 1, dans lequel ledit système de capteur (54 ; 56) inclut un dispositif de mesure d'humidité diélectrique.

3. Système selon la revendication 1 ou 2, dans lequel ledit système de capteur (54) est incorporé dans ladite structure de matériau composite (42, 44).

4. Système selon la revendication 1 ou 2, dans lequel ledit système de capteur (56) est incorporé dans un échantillon de matériau composite (60), ledit échantillon de matériau composite (60) étant monté sur ladite structure de matériau composite (42, 44).

5. Système selon la revendication 1, 2, 3 ou 4, dans lequel ladite structure de matériau composite est une structure de carter de moteur extérieure (42) du moteur à turbine à gaz (20) ; de préférence dans lequel ledit système de capteur (54) est situé de manière adjacente à une bride (42F) de ladite structure de carter de moteur extérieure (42).

6. Système selon la revendication 1, 2, 3 ou 4, dans lequel ladite structure de matériau composite est une structure de carter de moteur intérieure (44).

7. Système selon une quelconque revendication précédente, dans lequel ladite commande (52) est une commande électronique numérique à autorité totale (FADEC).

8. Système selon une quelconque revendication précédente comprenant :
un dispositif d'affichage de cockpit (64) en communication avec ladite commande (52), ledit dispositif d'affichage de cockpit servant à afficher lesdites données d'humidité.

9. Système selon une quelconque revendication précédente, dans lequel lesdites données d'humidité incluent un temps mort avant décollage ; et/ou dans lequel lesdites données d'humidité incluent un temps ; et/ou dans lequel lesdites données d'humidité incluent un compte à rebours.

10. Système selon une quelconque revendication précédente, comprenant en outre un ordinateur de commande de vol (66) en communication avec ladite commande (52) pour limiter un domaine de vol d'aéronef en réponse audit niveau d'humidité.

11. Procédé d'ajustement d'opérations de vol comprenant :
la détermination d'un niveau d'humidité dans une structure de matériau composite (42, 44) d'un moteur à turbine à gaz (20) ;
**caractérisé par** la communication de données d'humidité liées au niveau d'humidité à un personnel navigant,
et par la communication d'une limite G qui peut être exercée pendant que le matériau composite sèche en tant que données d'humidité, et l'ajustement d'opérations de vol selon la limite G communiquée.

12. Procédé selon la revendication 11, comprenant en outre :
la communication d'un temps mort en tant que données d'humidité.

13. Procédé selon la revendication 11 ou 12, comprenant en outre :
la limitation d'un domaine de vol d'aéronef en réponse audit niveau d'humidité.
